# EUROPÄISCHE PATENTSCHRIFT

(11) **EP 2 667 505 B1**
(45) Veröffentlichungstag und Bekanntmachung des Hinweises auf die Patenterteilung: **08.09.2021**
(21) Anmeldenummer: 13167213.1
(22) Anmeldetag: 10.05.2013
(51) Int. Cl.: H02P 25/08, B66F 9/075, H02K 7/14, H02K 19/10

(54) **Flurförderzeug mit elektrischem Antriebsmotor**
Industrial truck with an electric drive motor
Chariot de manutention doté d'un moteur d'entraînement électrique

(30) Priorität: 21.05.2012 DE 102012104342
(43) Veröffentlichungstag der Anmeldung: 27.11.2013
(73) Patentinhaber: Linde Material Handling GmbH, 63743 Aschaffenburg (DE)
(72) Erfinder: Weiner, Christian, 63785 Obernburg (DE); Sippel, Heiko, 63741 Aschaffenburg (DE); Marner, Wilfried, 63741 Nilkheim (DE)
(74) Vertreter: Patentship Patentanwaltsgesellschaft mbH

(56) Entgegenhaltungen:
- EP-A1- 1 806 313
- EP-A1- 2 127 934
- EP-B1- 0 996 583
- DE-A1-102008 047 621
- JP-A- H11 146 615
- JP-A- 2006 121 821
- US-A- 3 597 646
- US-A- 4 074 160

## Beschreibung

Die Erfindung betrifft ein Flurförderzeug mit zumindest einem angetriebenen Rad als elektrischer Fahrantrieb, das durch einen elektrischen Antriebsmotor angetrieben wird.

In dem Stand der Technik sind sogenannte synchrone Reluktanzmaschinen bekannt, die eine dreiphasige Drehfeldmaschine für den 4-Quadranten Betrieb darstellen, wobei diese als Motor oder Generator sowie jeweils in beiden Drehrichtungen ausgeführt und betrieben werden können.

Bei diesen synchronen Reluktanzmaschinen sind die Ständerwicklungen im Beispielsfall eines dreiphasigen Motors, vergleichbar einem Asynchronmotor, jeweils um 120° elektrisch versetzt angeordnete Phasenwicklungen jeweils für eine der drei Phasen.

Durch eine spezielle Formgebung des Läufers oder Rotors mit ausgeprägten Polen wird diesem eine starke bevorzugte Ausrichtung zum magnetischen Feld eingeprägt. Die Drehbewegung wird durch ein rotierendes magnetisches Feld erzeugt, dem der Rotor zu folgen versucht. Im Gegensatz zu Asynchronmaschinen oder durch Permanentmagnete erregten Synchronmaschinen, bei denen das Drehmoment durch die Wechselwirkung eines Magnetfelds mit einem durch einen Leiter fließenden Strom bzw. die Wechselwirkung mit den Permanentmagneten erzeugt wird, erfolgt die Drehmomenterzeugung in einer Reluktanzmaschine aufgrund der auf einen weichmagnetischen Stoff eines Rotors in einem Magnetfeld wirkenden Maxwellschen Kraft durch die das magnetische System den Zustand des geringsten magnetischen Widerstands oder Reluktanz anstrebt. Die Bewegung kommt durch das Ausrichten des Rotors an einem durch die Ständerspulen bzw. Statorwicklungen erzeugten Magnetfeld zustande, wobei durch einen geeigneten dreiphasigen Umrichter und die induktive Kopplung der Ständerspulen ein sich drehendes Magnetfeld erzeugt wird. Hierzu muss der Rotor eine bevorzugte Ausrichtung innerhalb des Magnetfelds und somit Pole aufweisen.

Dabei unterscheidet sich eine so genannte synchrone Reluktanzmaschine grundlegend im Aufbau als auch in der Ansteuerung von einer sogenannten geschalteten Reluktanzmaschine oder "Switched Reluctance Machine". Bei gleichem zugrunde liegendem physikalischen Prinzip der Erzeugung einer Drehbewegung aufgrund der Ausrichtung des Rotors an dem durch die Ständerspulen erzeugten und sich drehenden Magnetfeld sind die Ständerwicklung der synchronen Reluktanzmaschine, ähnlich dem Asynchronmotor, als 120° versetzte, Dreiphasenwicklungen ausgeführt, während die Ständerwicklung einer n-phasigen geschalteten Reluktanzmaschine jeweils n-Ständerzähne bzw. Ständerpole oder eine der Polpaarzahl proportionales Vielfaches umspannt. Die Ständerwicklungen sind demnach um 180°/n elektrisch versetzt. Auch sind die Pole des Rotors einer geschalteten Reluktanzmaschine wesentlich stärker ausgeprägt als bei der synchronen Reluktanzmaschine. Nachteilig ist, dass dies bei einer geschalteten Reluktanzmaschine zu einer hohen Drehmomentwelligkeit und somit Geräuschentwicklung führt.

Die EP 0 996 583 B1 offenbart eine integrierte Steuerung für elektrische Hubwagen.

Die US 4 074 160 A offenbart rotierende elektrische Maschinen.

Die US 3 597 646 A offenbart eine dynamoelektrische Maschine in Form eines Reluktanzmotors.

Die JP H11 146615 A offenbart einen mehrphasigen Reluktanzmotor.

Die EP 1 806 313 A1 offenbart einen batteriebetriebenen Gabelstapler mit einem Synchronmotor.

Die DE 10 2008 047 621 A1 offenbart ein Flurförderzeug, insbesondere Gegengewichtsgabelstapler.

Die EP 2 127 934 A1 offenbart eine Struktur einer Übertragungsvorrichtung für einen Gabelstapler.

Bei batterie-elektrisch betriebenen Flurförderzeugen als elektrischer Fahrmotor eines elektrischen Fahrantriebs wurden Gleichstrommaschinen eingesetzt.

Gleichstrommaschinen sind einfach und kostengünstig anzusteuern.

Nachteilig an diesem Stand der Technik ist jedoch, dass Gleichstrommaschinen einen geringeren Wirkungsgrad als vergleichbare Wechselstrom-Maschinen haben. Darüber hinaus sind sie, aufgrund der hohen Anzahl an Einzelkomponenten, im Aufbau wesentlich komplexer als z.B. Asynchronmaschinen. Außerdem muss der Strom dem Anker über Schleifkontakte an dem Kommutator zugeführt werden. Diese Schleifkontakte sind als Bürsten oder Kohlebürsten ausgeführt und verschleißbehaftet, wodurch ein Wartungsaufwand entsteht.

Anstatt den früher eingesetzten Gleichstrommaschinen werden gegenwärtig als elektrischer Fahrmotor eines elektrischen Fahrantriebs überwiegend dreiphasige Asynchronmaschinen genutzt, oder bei größeren Leistungsanforderungen auch dreiphasige Permanentmagnetsynchronmotoren. Im Gegensatz zu den Gleichstrommaschinen sind Dreiphasensynchronmotoren oder Dreiphasenasynchronmotoren im Aufbau einfacher und wartungsfrei, wegen des entfallenen Kommutators, und zeichnen sie sich durch einen höheren Wirkungsgrad aus.

Nachteilig ist jedoch, dass die Ansteuerung, im Gegensatz zur Gleichstrommaschine, wegen des benötigten, gesteuerten dreiphasigen Drehfeldes wesentlich komplexer ist, denn es wird die Erfassung der Lage oder Drehgeschwindigkeit sowie eine entsprechende Leistungselektronik benötigt.

Der vorliegenden Erfindung liegt die Aufgabe zugrunde, ein Flurförderzeug mit mindestens einem elektrischen Antriebsmotor zur Verfügung zu stellen, das kostengünstig herzustellen ist und zuverlässig und robust arbeitet, um rauen Betriebsbedingungen gewachsen zu sein.

Diese Aufgabe wird durch ein Flurförderzeug mit den Merkmalen des Patentanspruchs 1 und 2 gelöst. Vorteilhafte Weiterbildungen der Erfindung werden in den Unteransprüchen angegeben.

Die Aufgabe der Erfindung wird gemäß dem Wortlaut von Anspruch 1 gelöst.

Die Aufgabe wird erfindungsgemäß ferner dadurch gelöst, dass bei einem Flurförderzeug mit zumindest einem angetrieben Rad als elektrischer Fahrantrieb, das durch einen elektrischen Antriebsmotor angetrieben wird, der elektrische Antriebsmotor einen Stator mit mindestens drei Phasenwicklungen zur Erzeugung eines Drehfeldes und einen Rotor mit weichmagnetischem Material hoher Permeabilität aufweist, wobei der Rotor Pole mit in Orientierung der Pole geringer magnetischer Reluktanz aufweist, und wobei der elektrische Antriebsmotor als synchrone Reluktanzmaschine ausgeführt und wobei das angetriebene Rad einem gelenkten Hinterrad entspricht, welches über ein Getriebe durch den Antriebsmotor angetrieben wird, und welches um eine Hochachse zur Einstellung eines Lenkwinkels in einer Trägerplatte drehbar gelagert ist, und wobei ein als synchrone Reluktanzmaschine ausgeführter elektrischer Lenkmotor über einen Zahnkranz den Einschlagwinkel des Rades einstellen kann.

Durch eine geeignete Leistungselektronik, beispielsweise einen Umrichter mit Halbleiterbausteinen, werden die Phasenwicklungen des Stators mit sinusförmigen Strömen so erregt, dass sich ein Drehfeld mit im Wesentlichen kontinuierlicher magnetischer Feldstärke bildet, deren Orientierung in Drehrichtung umläuft. Vorteilhaft ergibt sich durch ein Flurförderzeug, das mit einem solchen als synchrone Reluktanzmaschine wirkenden Elektromotor als elektrischem Antriebsmotor ausgestattet ist, ein kostengünstiger und sehr robuster Fahrantrieb, der mit großer Zuverlässigkeit und geringer Ausfallwahrscheinlichkeit arbeitet. Es ergibt sich ein geringer Materialeinsatz, da keine Magneten oder Kupfer- bzw. Aluminiumleiter auf dem Rotor benötigt werden, verbunden mit entsprechenden Kosteneinsparungen, wenn diese teureren Materialen nicht erforderlich sind.

Weitere Vorteile des erfindungsgemäßen Flurförderzeugs mit Antriebsmotor bestehen darin, dass keine Permanentmagnete erforderlich sind, deren Preise aufgrund eingesetzter seltener Materialien stark schwanken und sehr hoch sein kann. Der Antriebsmotor weist auch vorteilhaft einen guten Wirkungsgrad durch Wegfall der Ohmschen Verluste im Rotor auf und ist wartungsfrei, da bürstenlos. Durch den einfachen Aufbau ergibt sich auch eine große Montagefreundlichkeit bzw. gute Automatisierbarkeit der Fertigung. Bei einer Ausführung des Stators als Blechpaket mit verteilter Wicklung und/oder des Rotors als Blechpaket kann auch die Leistungsfähigkeit gut an den Bedarf angepasst werden über das Ändern der Länge des Blechpakets. Wegen des geringen Einflusses der magnetischen Sättigung im Überlastbereich kann der Antriebsmotor auch überlastet werden. Es erweist sich auch als vorteilhaft, dass der Antriebsmotor gegenüber thermischen Belastungen sich nicht kritisch verhält, da kein Permanentmagnetmaterial vorhanden ist, das aufgrund von zu starker Erwärmung seine Magnetisierung verlieren könnte, und dass eine einfache Kühlung möglich ist, da Verlustleistung überwiegend auf dem Stator in dessen Phasenwicklungen entsteht. Ebenso ist eine Kühlung der Lagerung des Rotors einfacher zu bewerkstelligen und es erfolgt von vorneherein aus dem Rotor selbst nur eine geringere Erwärmung der Lagerung. Obwohl vorteilhafter Weise eine Rückspeisung von Energie durch Generatorbetrieb grundsätzlich möglich ist, erfolgt eine solche jedoch nicht im Fehlerfall. Der elektrische Antriebsmotor des elektrischen Fahrantriebs des erfindungsgemäßen Flurförderzeugs kann in Stern- oder Dreiecksschaltung und unter Einsatz bestehender, kostengünstig zur Verfügung stehender Leistungselektronik, wie etwa eines Dreiphasenwechselrichters mit zugehöriger Sensorik, betrieben werden, wobei eine Strom-, Spannungs- oder Flussregelung mit Optimierung auf maximales Drehmoment oder maximale Leistung möglich ist. Dabei ist auch eine sensorlose Regelung möglich. Vorteilhaft kommt es schließlich zu keiner Bewegung des Antriebsmotors im Kurzschlussfall und somit zu unerwünschten Fahrbewegungen des Flurförderzeugs, wodurch eine hohe Betriebssicherheit des Flurförderzeugs erzielt wird.

Zur Erzeugung des Drehfeldes des Stators kann ein Umrichter vorgesehen sein, der die Phasenwicklungen sinusförmig erregt.

Vorteilhaft weist der der Rotor vier radial nach außen gerichtete Pole auf.

Die vier Pole können in zwei sich unter 90° schneidenden Achsen angeordnet sein.

Der Rotor kann Segmente an seinem Umfang aufweisen, die in Umfangsrichtung jeweils mit einem Luftspalt zueinander beanstandet sind. Hierdurch können auf einfache Weise die entsprechenden Pole gebildet werden.

In günstiger Ausführungsform der Erfindung weist der Rotor axial laminierte Bleche auf, deren offene, radiale Schnittkanten die Pole bilden.

Dadurch lässt sich auf kostengünstige Art und Weise ein Rotor eines erfindungsgemäßen Antriebsmotors bilden, der insbesondere gut an unterschiedliche Leistungsanforderungen angepasst werden kann, etwa durch eine unterschiedliche axiale Länge des Rotors, aber auch durch eine angepasste Anzahl von Blechen, die übereinander laminiert sind.

Der Rotor kann Flusssperren-Schnitte aufweisen.

Eine alternative Möglichkeit, den Rotor herzustellen, besteht darin, durch nach dem Stand der Technik bekannte Methoden erzeugte Ausnehmungen Sperren für den magnetischen Fluss zu bilden, um die Pole am Rotor herzustellen.

In einer Weiterbildung der Erfindung kann der Rotor zusätzliche Eisenstäbe und/oder Aluminiumstäbe aufweisen.

Der Rotor kann zusätzliche Wicklungen aus Eisen- und/oder Aluminiumdraht aufweisen.

In einer Ausführungsform der Erfindung weist der Rotor zusätzliche Permanentmagnete auf.

Erfindungsgemäß weist das Flurförderzeug zwei angetriebene Räder auf, die von jeweils einem elektrischen Antriebsmotor angetrieben werden.

Der elektrische Fahrantrieb mit den elektrischen Antriebsmotoren kann in eine Antriebsachse integriert werden oder elektrische Antriebsmotoren können jeweils außenseitig an einer Antriebsachse angeflanscht werden und jeweils ein Antriebsrad antreiben. In eine Antriebsachse kann auch ein Differentialgetriebe mit einem einzelnen elektrischen Antriebsmotor integriert werden, der beide Antriebsräder antreibt. Eine elektronische Steuereinheit und/oder eine Leistungselektronik kann ebenfalls in die Achse integriert werden, aber auch in den elektrischen Antriebsmotor. Alternativ ist auch eine Ausführung mit einer externen Steuereinheit und/oder Leistungselektronik denkbar.

Weitere Vorteile und Einzelheiten der Erfindung werden anhand des in den schematischen Figuren dargestellten Ausführungsbeispiels näher erläutert. Hierbei zeigen
- Fig. 1a: schematisch ein Ausführungsbeispiel eines Rotors eines elektrischen Antriebsmotors eines elektrischen Fahrantriebs im Querschnitt, der bei dem erfindungsgemäßen Flurförderzeug zum Einsatz kommen,
- Fig. 1b: schematisch ein weiteres Ausführungsbeispiel eines Rotors eines elektrischen Antriebsmotors eines elektrischen Fahrantriebs im Querschnitt, der bei dem erfindungsgemäßen Flurförderzeug zum Einsatz kommt,
- Fig. 1c: schematisch ein drittes Ausführungsbeispiel eines Rotors eines elektrischen Antriebsmotors eines elektrischen Fahrantriebs im Querschnitt, der bei dem erfindungsgemäßen Flurförderzeug zum Einsatz kommt,
- Fig. 2: schematisch ein Schaltbild eines nach dem Stand der Technik bekannten Dreiphasenumrichters,
- Fig. 3: schematisch eine Anordnung der Statorwicklungen einer im Stand der Technik bekannten geschaltete Reluktanzmaschine,
- Fig. 4: schematisch ein Schaltbild einer im Stand der Technik bekannten Ansteuerung der geschalteten Reluktanzmaschine der Fig. 3,
- Fig. 5: schematisch, entsprechend dem Stand der Technik, die Beschaltung der Wicklungen der geschalteten Reluktanzmaschine der Fig. 3,
- Fig. 6: ein Ausführungsbeispiel eines erfindungsgemäßen Flurförderzeugs und
- Fig. 7: schematisch eine elektrische Antriebseinheit eines Fahrantriebs des erfindungsgemäßen Flurförderzeugs der Fig. 6.

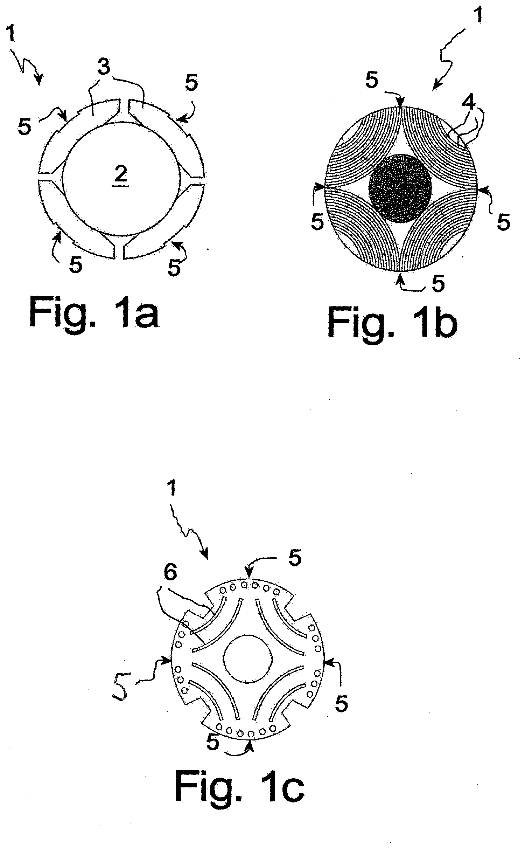

Die Fig. 1a zeigt schematisch ein Ausführungsbeispiel eines Rotors 1 eines elektrischen Antriebsmotors eines elektrischen Fahrantriebs, der bei einem erfindungsgemäßen Flurförderzeug zum Einsatz kommt. Der Rotor 1 besteht aus einer Rotorwelle 2 sowie vier Segmenten 3 aus weichmagnetischem oder einem geeigneten hochpermeablen Material, die am Umfang angeordnet und jeweils unter Ausbildung eines Luftspalts untereinander beanstandet sind. Die Segmente 3 bilden in Umfangsrichtung betrachtet in ihrem jeweils mittleren Bereich Pole 5, die beim Anliegen eines äußeren Magnetfelds sich mit dem Magnetfeld auszurichten suchen, da in der Orientierung der Pole 5 die kleinste magnetische Reluktanz vorliegt. Wird durch Statorwicklungen ein äußeres Drehfeld erzeugt, so wird der Rotor 1 von dem Magnetfeld mitgenommen. Die vier Pole 5 sind in zwei sich rechtwinklig schneidenden Achsen angeordnet.

Die Fig. 1b zeigt schematisch ein weiteres Ausführungsbeispiel eines Rotors 1 eines elektrischen Antriebsmotors im Querschnitt, der bei dem erfindungsgemäßen Flurförderzeug zum Einsatz kommt. Einander entsprechende Bauteile sind wie auch in den folgenden Zeichnungen mit gleichen Bezugsziffern versehen. Der Rotor 1 besteht hier aus mehreren übereinandergelegten und aneinander befestigten, beispielsweise verklebten, Blechen 4. Durch dieses "Laminieren" der Bleche 4 wird eine bevorzugte Ausrichtung der entstehenden Blechpakete mit dem Magnetfeld in der Ebene der Bleche 4 erreicht. Werden die Bleche, wie in Fig. 1b dargestellt, in vier Viertelkreisen angeordnet, so bilden sich vier Pole 5 an den Stellen, an denen die laminierten Bleche 4 den Außenradius des Rotors 1 schneiden.

Die Fig.1c zeigt schematisch ein drittes Ausführungsbeispiel eines Rotors 1 eines Antriebsmotors im Querschnitt, der bei dem erfindungsgemäßen Flurförderzeug zum Einsatz kommt. Bei diesem Ausführungsbeispiel weist der Rotor 1 im Querschnitt betrachtet Flusssperren-Schnitte 6 auf, die durch nach dem Stand der Technik bekannte Methoden erzeugt werden, beispielsweise sofern der Rotor 1 aus axial hintereinander angeordneten Blechen aufgebaut ist, durch Ausstanzen. Diese Flusssperren-Schnitte 6 bilden Barrieren für den magnetischen Fluss und führen dazu, dass sich wiederum Pole 5 bilden.

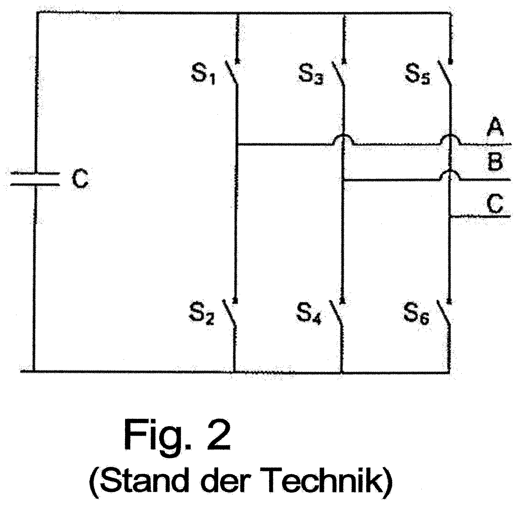

Die Fig. 2 zeigt schematisch ein Schaltbild eines nach dem Stand der Technik bekannten Dreiphasenumrichters. Ein erstes elektronisches Schaltventil S1 bildet mit einem zweiten elektronischen Schaltventil S2, die als Leistungsbauelemente, beispielsweise Leistungstransistoren ausgebildet sind, eine Schaltbrücke für eine erste Phase A. Weitere elektronische Schaltventile S3 und S4 bilden eine Schaltbrücke für eine zweite Phase B und elektronische Schaltventile S5 und S6 bilden eine Schaltbrücke für eine dritte Phase C. Durch geeignete Modulationsverfahren, wie etwa eine Pulsweitenmodulation, kann durch einen solchen Dreiphasenumrichter aus Gleichstrom ein Drehstrom mit jeweils sinusförmigen Phasen erzeugt werden, der in Sternschaltung oder Dreieckschaltung bei beispielsweise um 120° elektrisch wirksam zueinander angeordneten Statorspulen des erfindungsgemäßen Antriebsmotors ein magnetisches Drehfeld erzeugen kann.

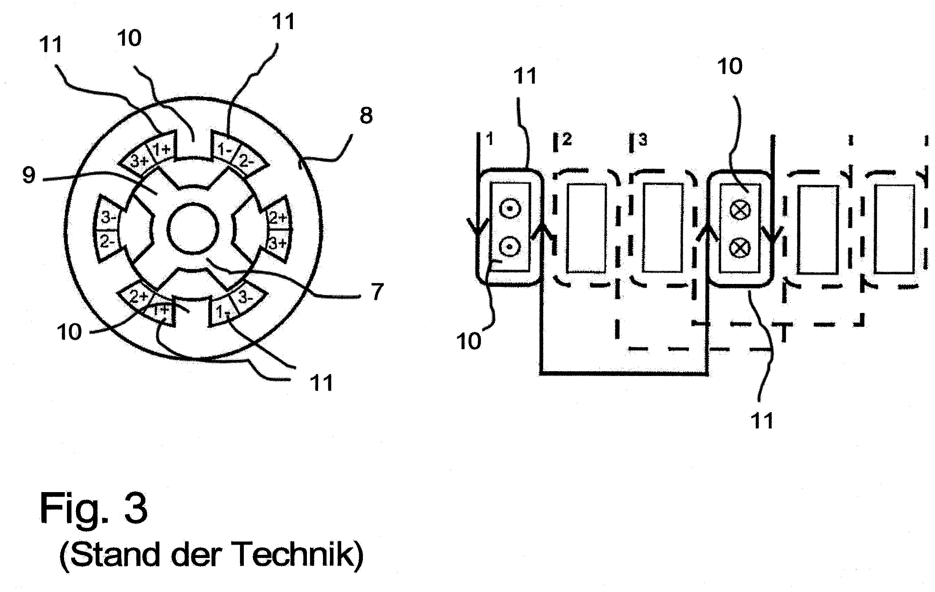

Die Fig. 3 stellt schematisch eine Anordnung der Statorwicklungen einer im Stand der Technik bekannten geschalteten Reluktanzmaschine dar. Dargestellt ist eine typische Geometrie und Wicklungsanordnung einer dreiphasigen 6/4 geschalteten Reluktanzmaschine. Ein Rotor 7 läuft innerhalb eines Stators 8, wobei der Rotor 7 insgesamt vier Polschuhe 9 aufweist und der Stator 8 insgesamt sechs Polschuhe 10. Je gegenüberliegende Polschuhe 10 des Stators 8 sind von einer gemeinsamen Wicklung 11 so umfasst das diese bei fließendem Strom entgegengesetzte magnetische Pole bilden. Dabei kann die größere Anzahl von sechs Polen 10 des Stators 8 nacheinander mit Strom beschaltet werden, wie sich aus der schematischen Darstellung rechts in Fig. 3 ergibt.

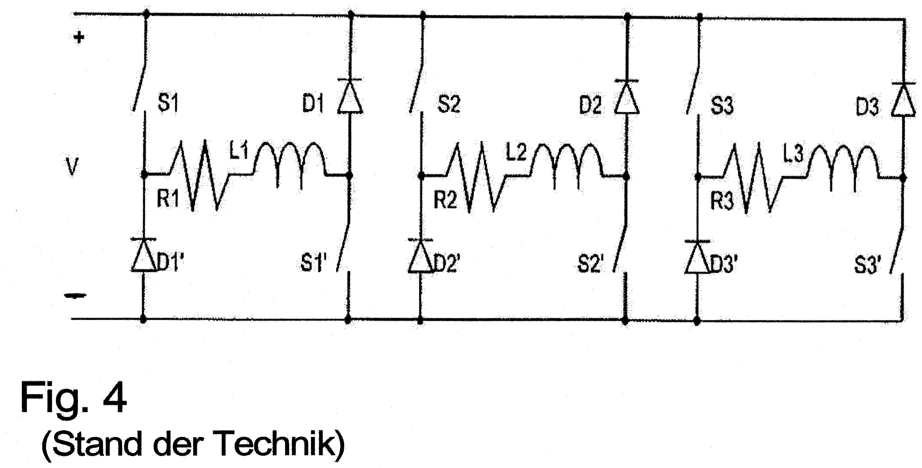

In der Fig. 4 ist schematisch ein Schaltbild einer im Stand der Technik bekannten Ansteuerung der geschalteten Reluktanzmaschine der Fig. 3 dargestellt, wobei die Wicklungen 11 durch die Ersatzschaltbilder der ohmsche Widerstände R2, R2, R3 sowie die Induktivitäten L1, L2 und L3 dargestellt sind.

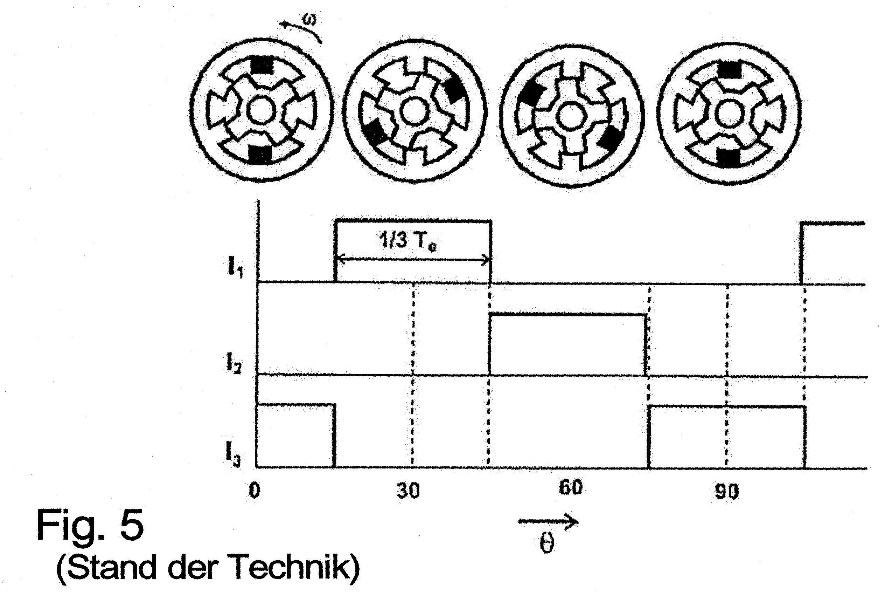

Die Fig. 5 zeigt schematisch, entsprechend dem Stand der Technik, die Beschaltung der Wicklungen der geschalteten Reluktanzmaschine der Fig. 3. Dargestellt sind die Stromwerte I1, I2 und I3 für die drei Wicklungen 11, mit denen die insgesamt sechs Polschuhe 10 des Stators 8 umschlossen sind. Im Gegensatz zur sinusförmigen Erregung einer synchronen Reluktanzmaschine werden unipolare Rechteckströme erzeugt. Diese Ströme werden über die in Fig.4 dargestellte Ansteuerung durch einen Halbbrücken-Umrichter eingeprägt.

Nachteilig ist, dass es bei einer geschalteten Reluktanzmaschine zu einer hohen Drehmomentwelligkeit und somit Geräuschentwicklung kommt.

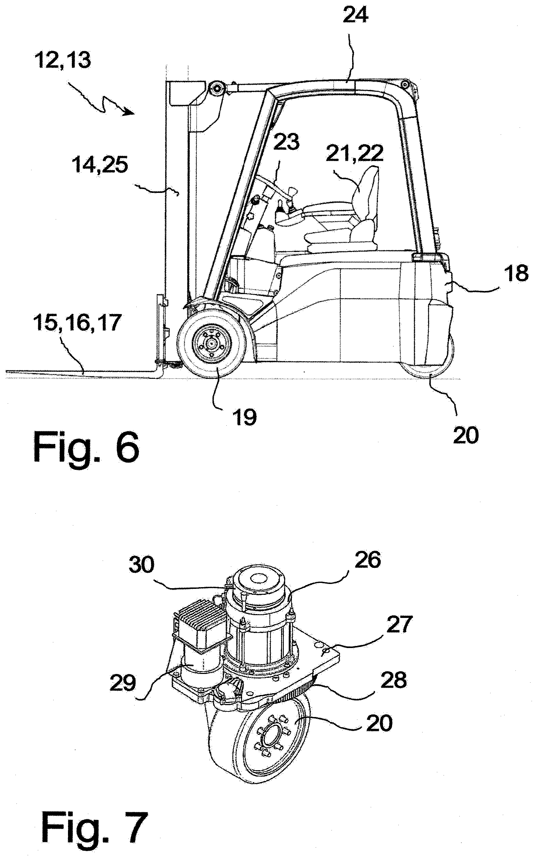

Die Fig. 6 zeigt ein Ausführungsbeispiel eines erfindungsgemäßen Flurförderzeugs 12 in Seitenansicht. Das dargestellte Flurförderzeug ist beispielsweise als elektrisch über eine nicht dargestellte Traktionsbatterie betriebener Gegengewichtsgabelstapler 13 ausgebildet.

Der Gegengewichtsgabelstapler 12 weist frontseitig eine als Hubgerüst 25 ausgebildete vordere Hubvorrichtung 14 mit einem an dieser höhenbeweglich geführten Lastaufnahmemittel 15 auf, beispielsweise einer aus zwei Gabelzinken 16 bestehenden Lastgabel 17. Ein auf dem Lastaufnahmemittel 15 aufliegendes Lastgewicht wird durch ein heckseitiges hinteres Gegengewicht 18 ausgeglichen.

Der in dem vorliegenden Beispiel beispielsweise batterie-elektrisch angetriebene Gegengewichtsgabelstapler 13 weist eine Vorderachse mit zwei Vorderrädern 19 auf. Im dargestellten Ausführungsbeispiel sind die Vorderräder 19 als nicht angetriebene Räder ausgebildet. Das im dargestellten Ausführungsbeispiel als Dreiradstapler ausgebildete Flurförderzeug 12 wird über ein einzelnes gelenktes Rad 20 gesteuert. In der hier als Beispiel gezeigten Alternative, in der die Vorderrädern 19 als nicht angetriebene Räder ausgebildet sind, ist das gelenkte Rad 20 als Antriebsrad ausgeführt, das durch einen elektrischen Antriebsmotor gemäß den Figuren 1a bis 1c als elektrischer Fahrmotor angetrieben wird. Der Gegengewichtsgabelstapler 13 kann alternativ mit einem verbrennungsmotorischen Antriebssystem versehen sein und/oder als Vierradstapler, bei dem beispielsweise zwei gelenkte Hinterräder gesteuert werden.

Gemäß einer alternativen Ausführungsform der Erfindung sind die Vorderräder 19 als Antriebsräder ausgebildet, wobei zum Lenken ein gelenktes Rad 20 oder eine Lenkachse mit zwei gelenkten Rädern 20 vorgesehen sein kann. Wenn die beiden Vorderrädern 19 angetrieben werden, kann der Gegengewichtsgabelstapler 13 eine Antriebsachse aufweisen, in die zwei Antriebsmotoren gemäß den Figuren 1a bis 1c als elektrische Fahrmotoren integriert sind, die jeweils ein Vorderrad 19 antreiben. Alternativ ist es auch möglich (Alternative nicht durch die Erfindung definiert), über ein in eine solche Antriebachse integriertes Differentialgetriebe beide Vorderräder 19 durch einen einzigen elektrischen Antriebsmotor gemäß den Figuren 1a bis 1c als elektrischer Fahrmotor anzutreiben. Ein Fahrerplatz 21 des Flurförderzeugs 12 ist mit einem Fahrersitz 22 versehen. Der Fahrersitz 22 und weitere Bedienelemente, beispielsweise ein Lenkrad 23, befinden sich unter einem Fahrerschutzdach 24.

Unterhalb des Fahrersitzes 22 befindet sich bei dem batterie-elektrisch angetriebenen Gegengewichtsgabelstapler 13 eine Traktionsbatterie und wäre bei einem verbrennungsmotorisch angetriebenen Gegengewichtsgabelstapler ein Verbrennungsmotor angeordnet.

Die Fig. 7 zeigt schematisch eine Antriebseinheit mit einem elektrischen Fahrantrieb des erfindungsgemäßen Flurförderzeugs 12 der Fig. 6. Das gelenkte Rad 20 kann über ein Getriebe durch einen elektrischen Antriebsmotor 26 gemäß den Figuren 1a bis 1c als elektrischer Fahrmotor angetrieben werden. Dabei ist das Hinterrad 20 um eine Hochachse zur Einstellung eines Lenkwinkels in einer Trägerplatte 27 drehbar gelagert und über einen Zahnkranz 28 kann ein elektrischer Lenkmotor 29 gemäß den Fig. 1a bis 1c den Einschlagswinkel des Rades 20 einstellen. Eine elektronische Steuereinheit 30 mit Umrichter ist mit dem Antriebsmotor 26 verbunden. Dadurch ist die elektronische Steuereinheit 30 mit dem Antriebsmotor 26 zu einer Baueinheit integriert. Diese kann jedoch auch getrennt von dem Antriebsmotor 26 angeordnet werden.

Die Erfindung ist nicht beschränkt auf Gegengewichtsgabelstapler. Vielmehr kann jegliche Art von Flurförderzeugen mit einem elektrischen Antriebsmotor gemäß der Erfindung ausgestattet werden. Es können etwa auch Lagertechnikgeräte mit elektrischem Antrieb mit einem solchen elektrischen Antriebsmotor versehen werden, wie beispielsweise Hubwagen, Kommissionierer, Schlepper, Plattformwagen, Schubstapler, Schubmaststapler und Regalstapler.

## Patentansprüche

1. Flurförderzeug umfassend zwei angetriebene Räder (19) als elektrischer Fahrantrieb, sowie jeweils einen elektrischen Antriebsmotor (26) zum Antrieb der Räder (19), wobei der jeweils eine elektrische Antriebsmotor (26) einen Stator mit mindestens drei Phasenwicklungen zur Erzeugung eines Drehfeldes und einen Rotor (1) mit weichmagnetischem Material hoher Permeabilität aufweist, wobei der Rotor (1) Pole (5) mit in Orientierung der Pole (5) geringer magnetischer Reluktanz aufweist, wobei der jeweils eine elektrische Antriebsmotor (26) als synchrone Reluktanzmaschine ausgeführt ist, und wobei die zwei angetriebenen Räder (19) Vorderräder sind.

2. Flurförderzeug mit zumindest einem angetriebenen Rad (20) als elektrischer Fahrantrieb, das durch einen elektrischen Antriebsmotor (26) angetrieben wird,
**dadurch gekennzeichnet,**
**dass** der elektrische Antriebsmotor (26) einen Stator mit mindestens drei Phasenwicklungen zur Erzeugung eines Drehfeldes und einen Rotor (1) mit weichmagnetischem Material hoher Permeabilität aufweist, wobei der Rotor (1) Pole (5) mit in Orientierung der Pole (5) geringer magnetischer Reluktanz aufweist, und wobei der elektrische Antriebsmotor (26) als synchrone Reluktanzmaschine ausgeführt ist, und
**dass** das angetriebene Rad (20) einem gelenkten Hinterrad (20) entspricht, welches über ein Getriebe durch den Antriebsmotor (26) angetrieben wird, und welches um eine Hochachse zur Einstellung eines Lenkwinkels in einer Trägerplatte (27) drehbar gelagert ist, und wobei ein als synchrone Reluktanzmaschine ausgeführter elektrischer Lenkmotor (29) über einen Zahnkranz (28) den Einschlagwinkel des Rades (20) einstellen kann.

3. Flurförderzeug nach Anspruch 1 oder 2,
**dadurch gekennzeichnet,**
**dass** zur Erzeugung des Drehfeldes des Stators ein Umrichter vorgesehen ist, der die Phasenwicklungen sinusförmig erregt.

4. Flurförderzeug nach einem der Ansprüche 1 bis 3,
**dadurch gekennzeichnet,**
**dass** der Rotor (1) vier radial nach außen gerichtete Pole (5) aufweist.

5. Flurförderzeug nach einem der Ansprüche 1 bis 4,
**dadurch gekennzeichnet,**
**dass** die vier Pole (5) in zwei sich unter 90° schneidenden Achsen angeordnet sind.

6. Flurförderzeug nach einem der Ansprüche 1 bis 5,
**dadurch gekennzeichnet,**
**dass** der Rotor (1) Segmente (3) an seinem Umfang aufweist, die in Umfangsrichtung jeweils mit einem Luftspalt zueinander beanstandet sind.

7. Flurförderzeug nach einem der Ansprüche 1 bis 6,
**dadurch gekennzeichnet,**
**dass** der Rotor (1) axial laminierte Bleche (4) aufweist, deren offene, radiale Schnittkanten die Pole (5) bilden.

8. Flurförderzeug nach einem der Ansprüche 1 bis 7,
**dadurch gekennzeichnet,**
**dass** der Rotor (1) Flusssperren-Schnitte (6) aufweist.

9. Flurförderzeug nach einem der Ansprüche 1 bis 8,
**dadurch gekennzeichnet,**
**dass** der Rotor (1) zusätzliche Eisenstäbe und/oder Aluminiumstäbe aufweist.

10. Flurförderzeug nach einem der Ansprüche 1 bis 9,
**dadurch gekennzeichnet,**
**dass** der Rotor (1) zusätzliche Wicklungen aus Eisen- und/oder Aluminiumdraht aufweist.

11. Flurförderzeug nach einem der Ansprüche 1 bis 10,
**dadurch gekennzeichnet,**
**dass** der Rotor (1) zusätzliche Permanentmagnete aufweist.

## Claims

1. Industrial truck comprising two driven wheels (19) as an electric traction drive, and a respective electric drive motor (26) for driving the wheels (19), wherein the respective electric motor (26) has a stator with at least three phase windings for generating a rotary field and a rotor (1) consisting of a magnetically soft material of high permeability, wherein the rotor (1) has poles (5) with a low magnetic reluctance in the orientation of the poles (5), wherein the respective electric motor (26) is configured as a synchronous reluctance machine, and wherein the two driven wheels (19) are front wheels.

2. Industrial truck with at least one driven wheel (20) as an electric traction drive, which is driven by an electric drive motor (26),
**characterized**
**in that** the electric drive motor (26) has a stator with at least three phase windings for generating a rotary field and a rotor (1) consisting of a magnetically soft material of high permeability, wherein the rotor (1) has poles (5) with a low magnetic reluctance in the orientation of the poles (5), and wherein the electric drive motor (26) is configured as a synchronous reluctance machine, and in that the driven wheel (20) corresponds to a steered rear wheel (20) which is driven by the drive motor (26) via a transmission, and which is mounted in a support plate (27) so as to be rotatable about a vertical axis in order to adjust a steering angle, and wherein an electric steering motor (29) which is configured as a synchronous reluctance machine can adjust the turning angle of the wheel (20) via a gear ring (28).

3. Industrial truck according to Claim 1 or 2,
**characterized**
**in that** an inverter is provided for generating the rotary field of the stator, which inverter excites the phase windings sinusoidally.

4. Industrial truck according to one of Claims 1 to 3,
**characterized**
**in that** the rotor (1) has four radially outwardly directed poles (5).

5. Industrial truck according to one of Claims 1 to 4,
**characterized**
**in that** the four poles (5) are arranged in two axes which intersect at 90°.

6. Industrial truck according to one of Claims 1 to 5,
**characterized**
**in that**, on its circumference, the rotor (1) has segments (3) which are spaced apart from one another in the circumferential direction in each case by way of an air gap.

7. Industrial truck according to one of Claims 1 to 6,
**characterized**
**in that** the rotor (1) has axial laminations (4), the open radial cut edges of which form the poles (5).

8. Industrial truck according to one of Claims 1 to 7,
**characterized**
**in that** the rotor (1) has flux barrier cuts (6).

9. Industrial truck according to one of Claims 1 to 8,
**characterized**
**in that** the rotor (1) has additional iron rods and/or aluminium rods.

10. Industrial truck according to one of Claims 1 to 9,
**characterized**
**in that** the rotor (1) has additional windings consisting of iron and/or aluminium wire.

11. Industrial truck according to one of Claims 1 to 10,
**characterized**
**in that** the rotor (1) has additional permanent magnets.

## Revendications

1. Chariot de manutention comprenant deux roues entraînées (19) en tant qu'entraînement de déplacement électrique, ainsi qu'à chaque fois un moteur d'entraînement électrique (26) pour l'entraînement des roues (19),
le moteur d'entraînement électrique respectif (26) comprenant un stator muni d'au moins trois enroulements de phase pour la génération d'un champ tournant et un rotor (1) muni d'un matériau magnétique faible de perméabilité élevée, le rotor (1) comprenant des pôles (5) présentant une faible réluctance magnétique dans l'orientation des pôles (5), le moteur d'entraînement électrique respectif (26) étant réalisé en tant que machine à réluctance synchrone, et les deux roues entraînées (19) étant des roues avant.

2. Chariot de manutention muni d'au moins une roue entraînée (20) en tant qu'entraînement de déplacement électrique, qui est entraînée par un moteur d'entraînement électrique (26), **caractérisé en ce que** le moteur d'entraînement électrique (26) comprend un stator muni d'au moins trois enroulements de phase pour la génération d'un champ tournant et un rotor (1) muni d'un matériau magnétique faible de perméabilité élevée, le rotor (1) comprenant des pôles (5) présentant une faible réluctance magnétique dans l'orientation des pôles (5), et le moteur d'entraînement électrique (26) étant réalisé en tant que machine à réluctance synchrone, et
**en ce que** la roue entraînée (20) correspond à une roue arrière dirigée (20), qui est entraînée par le moteur d'entraînement (26) par l'intermédiaire d'une transmission, et qui est montée de manière rotative dans une plaque support (27) autour d'un axe vertical pour l'ajustement d'un angle de direction, et un moteur de direction électrique (29) réalisé en tant que machine à réluctance synchrone peut régler l'angle de braquage de la roue (20) par l'intermédiaire d'une couronne dentée (28).

3. Chariot de manutention selon la revendication 1 ou 2, **caractérisé en ce qu'**un convertisseur est prévu pour la génération du champ tournant du stator, qui excite les enroulements de phase de manière sinusoïdale.

4. Chariot de manutention selon l'une quelconque des revendications 1 à 3, **caractérisé en ce que** le rotor (1) comprend quatre pôles (5) orientés radialement vers l'extérieur.

5. Chariot de manutention selon l'une quelconque des revendications 1 à 4, **caractérisé en ce que** les quatre pôles (5) sont agencés dans deux axes se coupant à 90°.

6. Chariot de manutention selon l'une quelconque des revendications 1 à 5, **caractérisé en ce que** le rotor (1) comprend des segments (3) sur sa périphérie, qui sont chacun espacés les uns des autres dans la direction périphérique avec un espace d'air.

7. Chariot de manutention selon l'une quelconque des revendications 1 à 6, **caractérisé en ce que** le rotor (1) comprend des tôles (4) axialement laminées, dont les arêtes de coupe radiales ouvertes forment les pôles (5) .

8. Chariot de manutention selon l'une quelconque des revendications 1 à 7, **caractérisé en ce que** le rotor (1) comprend des découpes d'arrêt d'écoulement (6).

9. Chariot de manutention selon l'une quelconque des revendications 1 à 8, **caractérisé en ce que** le rotor (1) comprend des barres en fer et/ou des barres en aluminium supplémentaires.

10. Chariot de manutention selon l'une quelconque des revendications 1 à 9, **caractérisé en ce que** le rotor (1) comprend des enroulements en fil de fer et/ou d'aluminium supplémentaires.

11. Chariot de manutention selon l'une quelconque des revendications 1 à 10, **caractérisé en ce que** le rotor (1) comprend des aimants permanents supplémentaires.
